# EUROPEAN PATENT APPLICATION

(11) **EP 1 857 250 A2**
(43) Date of publication of application: **21.11.2007**
(21) Application number: 07107558.4
(22) Date of filing: 04.05.2007
(51) Int. Cl.: B29C 45/00, G01M 19/00, B05B 1/00

(54) **Equipment for the moulding, assembly and functioning control of a multicomponent distributing device and relative method**

(30) Priority: 09.05.2006 IT MI20060910
(71) Applicant: Caliberg S.r.l., 24035 Curno, BG (IT)
(72) Inventor: MAGGI, Andrea, 24068, SERIATE (Bergamo) (IT)
(74) Representative: De Gregori, Antonella

(57) **Abstract**

Equipment for the moulding, assembly and functioning control of a multicomponent distributing device of the type comprising at least two moulds, each of which consists of two semi-moulds respectively assembled on a fixed part and a moveable part of a press, each mould comprising a series of casts for the production by injection of different components to be assembled, and also comprising means for the relative moving and assembly of said components of each distributing device, wherein said assembly is effected on the hemi-cast (11) of a component (13) through which the fluid to be supplied passes in its definitive utilization, said equipment also comprising a compressed air injection duct (15) in correspondence with each of said hemi-casts (11).

## Description

The present invention relates to equipment for the moulding, assembly and functioning control of a multicomponent distributing device and to a relative method.

In the field of the moulding of objects made of plastic material, such as thermoplastic and thermosetting resins and any injection mouldable material, various solutions for the manufacturing of objects consisting of two or more assembled components are known.

A first method consists in separately producing in various single moulds, the two components which form the end-product and subsequently feeding them onto lines or automatic machines for their assembly into the end-product.

This involves numerous drawbacks both in terms of the number of items of equipment necessary, i.e. moulds, assembly machines, feeding systems, and also with respect to the assembly procedure which requires great precision in the manipulation of the components and their centering, above all when the assembly is effected on incident planes with respect to each other and in particular on orthogonal planes.

Alternatively, moulds are used which produce, by the injection of more than one resin, components which are co-injected rather than assembled.

Not all objects consisting of various components however can be co-injected. The request for producing components having extremely particular forms and/or with a high precision can in fact make this moulding technique unusable.

Furthermore, according to patent application MI2004A001989, equipment is described together with a relative moulding and assembly method for the moulding of objects into various components and for their assembly on a plane not parallel to the moulding plane, in particular on a plane orthogonal to the moulding plane, inside said equipment, according to which, after moulding, the moulded components remain on the casts of the semi-moulds, of which some portions are connected to moving means which cause the relative movement of the casts on which the moulded components are positioned causing the assembly of the same components.

Once the assembled product has been produced, in particular in the case object of the present invention, relating to distributing devices, its correction functioning must be controlled, i.e. the presence of the passage hole which must guarantee a certain distribution flow-rate. Regardless of the type of technology used for the moulding and assembly of the single components, said control is effected off-line, by connecting the single items assembled to a pressure line and passing air through the single distributing devices.

It can be easily understood how this type of control can be uneconomical due to the complexity of the operations required and the time necessary for effecting it.

An objective of the present invention is to overcome the disadvantages of the known art by proposing equipment for the moulding, assembly and functioning control of a distributing device with several components in which not only the assembly of the various components but also the functioning control phase of the assembled item can be effected without removing the distributing device from the mould.

A further objective of the present invention is to provide equipment and also a relative method for the moulding, assembly and functioning control of a multicomponent distributing device also suitable for the production of items consisting of two or more different resins.

Another objective of the present invention is to provide equipment and also a relative method for the moulding, assembly and functioning control of a multicomponent distributing device which are particularly simple and functional, with reduced costs.

These objectives according to the present invention are achieved by providing equipment for the moulding, assembly and functioning control of a multicomponent distributing device and also a relative moulding, assembly and functioning control method as specified in the respective independent claims.

Further characteristics are envisaged in the subsequent dependent claims.

The characteristics and advantages of equipment for the moulding, assembly and functioning control of a multicomponent distributing device and also a relative method, according to the present invention, will appear more evident from the following illustrative and non-limiting description, referring to the enclosed schematic drawings in which:

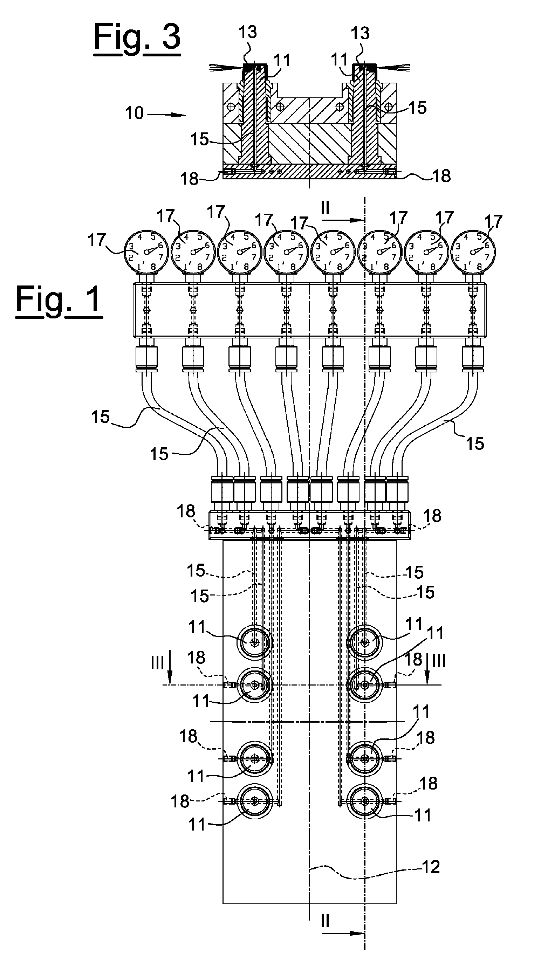

figure 1 is a schematic view of a semi-mould of the equipment for the moulding, assembly and functioning control of a multicomponent distributing device of the present invention;

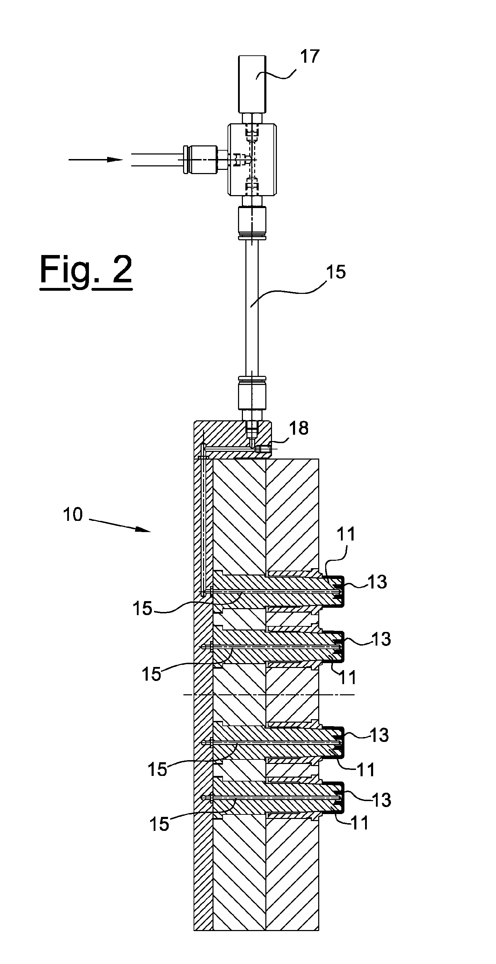

figure 2 is a sectional view of the semi-mould of figure 1, along the section line II-II;

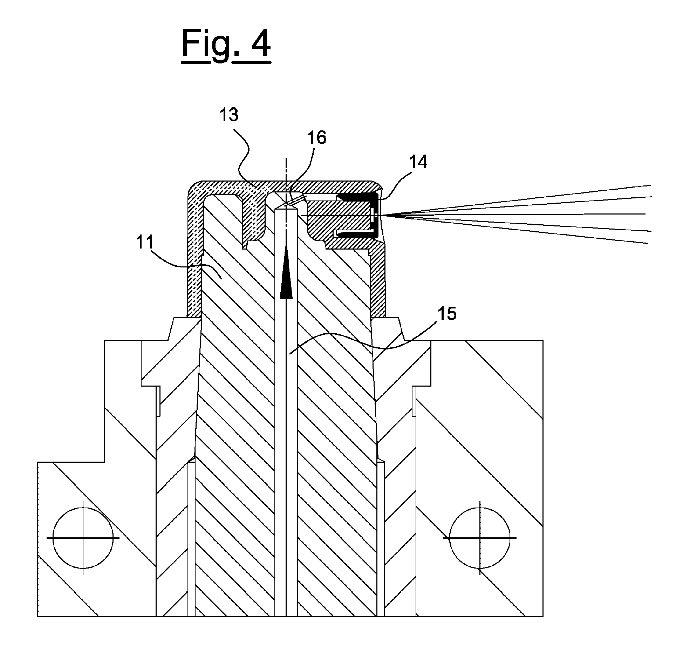

figure 3 is a sectional view of the semi-mould of figure 1, along the section line III-III;
figure 4 is a sectional view of an enlarged detail of a hemi-cast of the semi-mould of figure 1 on which a first component of the distributing device is moulded, on which a second component of the distributing device is subsequently assembled and the functioning control is effected once the assembly has been completed.

With reference to the figures, these show a semi-mould of equipment for the moulding, assembly and functioning control of a multicomponent distributing device according to the present invention, indicated as a whole with 10.

The semi-mould 10, which is fixed, faces a corresponding moveable semi-mould (not shown) and they jointly form a mould which comprises a series of casts for the injection of a corresponding number of models of a first component to be assembled.

Each cast consists of a pair of hemi-casts, one hemi-cast 11 housed on the semi-mould 10 and a corresponding hemi-cast (not shown) on the corresponding moveable semi-mould. One or more side cores which move radially with respect to the hemi-cast 11 can also correspond with each hemi-cast 11, for the formation of seats for the assembly of a second or further components.

The hemi-casts 11, which in the example are in a number equal to eight and are arranged in the semi-mould 10 on two symmetrical rows with respect to a median plane 12 of the semi-mould 10, can be in a great number in the desired quantity but for construction purposes and for the feeding of the resin, the number is generally a multiple of two.

In addition to the mould of which the semi-mould 10 forms a part, the equipment comprises at least a second mould (not shown) comprising a series of casts for the injection of a corresponding number of models of a second component to be assembled.

In the illustrative and non-limiting embodiment shown in the figures, the components are an aerosol distributor, which forms the first component 13, as well as a pad, or nozzle, which forms the second component 14, assembled inside a radial seat of the first component. In particular, the figures show the first component 13 and the second component 14 in an assembled position.

According to the invention, on each hemi-cast 11, on which the assembly of the components of the distributing device is effected, there is a duct 15, connected to a compressed air feeding device, and equipped with a calibrated supply hole 16, arranged in a position corresponding to that of the bottle on which the distributing device is to be applied. In this way, when the moulding and assembly phases have been completed, by injecting compressed air through the calibrated holes 16 of each hemi-cast 11, said compressed air passes through the distributing device with analogous procedures to those in its final utilization. If the passage of compressed air through the components 13, 14 of the distributing device is in some way blocked or hindered beyond the tolerance limits required, then the distributing device is faulty and must be rejected.

For the control of the correct functioning of each distributing device, the equipment for the moulding, assembly and functioning control of a multicomponent distributing device according to the present invention comprises a manometer 17 associated with each duct 15 and therefore with each hemi-cast 11. If, at the moment of the injection of compressed air, the manometers 17 indicate a homogeneous pressure drop on all the hemi-casts 11, consequently the moulding product can be considered valid. When, on the other hand, a pressure drop is not revealed in even one of the hemi-casts, i.e. a lower pressure drop is indicated with respect to the tolerance limits required, then the whole moulded product, or even the faulty distributing device alone, is rejected.

In any case, whether the whole moulded product be rejected, or the fault distributing device alone be eliminated, the presence of a manometer 17 associated with each duct 15 of each hemi-cast 11 allows which cast has produced the faulty distributing device to be identified and also enables the operator to intervene directly only on that particular cast to re-establish the normal functioning of the structure.

Each compressed air duct 15 also envisages the presence of stoppers 18, to allow access in certain points of the duct. To prevent pressure levels which are too high from being reached, safety valves (not shown) are also envisaged upstream of the manometers 17.

According to the present invention, the compressed air duct 15 is situated on the hemi-cast 11 opposite to that on which the nozzle which injects the plastic material for the moulding of the component, is positioned.

The equipment for the moulding, assembly and functioning control of a multicomponent distributing device according to the present invention allows the production of multicomponent distributing devices and their functioning control already on the mould, without having to remove the pieces, between one production phase and the next, to position them on specific machines for effecting the single phases.

In particular, the method for the moulding, assembly and functioning control of a distributing device according to the present invention comprises a first phase in which the moulds are flanked and the resin is injected into the casts to create the single components.

After the resin has cooled, in the second phase of the method according to the present invention, the semi-moulds are removed and the moulded components remain on the respective hemi-casts.

The subsequent phase envisages the assembly of the single components of each device, in particular by moving the casts on which the components are positioned, which are assembled on the corresponding main component, which however remains on the hemi-cast 11 on which it has been moulded.

The following phase envisages the injection of compressed air on each distributing device, in a position corresponding to that of its final use. In this phase, the pressure drop values are controlled in correspondence with each distributing device.

Finally, during the last restarting phase of the initial conditions of the moving organs, an expeller (not shown) acts to expel the finished items which are still supported on the relative hemi-casts 11.

The equipment for the moulding, assembly and functioning control of a multicomponent distributing device, and also the relative moulding, assembly and control method, object of the present invention, have the advantage of effecting, within the same mould, the contemporaneous moulding of components consisting of different resins, their assembly on planes incident with respect to each other, and in particular orthogonal, and also the functional control of the distributing device obtained.

The equipment for the moulding, assembly and functioning control of a multicomponent distributing device, and also the relative moulding, assembly and control method thus conceived can undergo numerous modifications and variants, all included in the invention; furthermore, all the details can be substituted with technically equivalent elements. In practice, the materials used, as also the dimensions, can vary according to technical requirements.

## Claims

1. Equipment for the moulding, assembly and functioning control of a multicomponent distributing device of the type comprising at least two moulds, each of which consisting of two semi-moulds respectively assembled on a fixed part and a moveable part of a press, each mould comprising a series of casts for the production by injection of different components to be assembled, and also comprising means for the relative moving and assembly of said components of each distributing device, **characterized in that** said assembly is effected on the hemi-cast (11) of a component (13) through which the fluid to be supplied passes in its definitive utilization, said equipment also comprising a compressed air injection duct (15) in correspondence with each of said hemi-casts (11).

2. The equipment according to claim 1, **characterized in that** a manometer (17) is connected to each of said ducts (15).

3. The equipment according to claim 1, **characterized in that** upstream of the manometers (17) there are safety valves.

4. The equipment according to claim 1, **characterized in that** the compressed air ducts (15) are situated on the hemi-casts (11) opposite to those on which the injection nozzle of the plastic material is situated for the moulding of the component.

5. The equipment according to claim 1, **characterized in that** it comprises casts (11) for the moulding of a first component (13) of a distributing device and casts for the moulding of a second component (14) of the same distributing device.

6. The equipment according to claim 5, **characterized in that** said casts (11) for a first component (13) are casts for an aerosol distributor and said casts for a second component (14) are casts for a pad, or nozzle, suitable for being assembled inside a cavity of said distributor.

7. A process for the moulding, assembly and functioning control of a multicomponent distributing device, which uses the equipment according to the previous claims, wherein the following series of operations, corresponding to five phases, are cyclically effected under regime conditions:
- a first moulding phase, wherein said semi-moulds are flanked and the resins of plastic material are injected into said casts for the moulding of at least two different components;
- a second cooling phase, wherein said semi-moulds are removed, said components remaining contained in the corresponding hemi-casts;
- a third assembly phase, wherein the single components of each distributing device are assembled to form the end-product;
- a fourth functioning control phase of each distributing device, wherein compressed air is injected on each distributing device, and the corresponding pressure drop values are controlled;
- a fifth expulsion phase, wherein an expeller of the end-products is activated.
